## Europäisches Patentamt

## European Patent Office

## Office européen des brevets

(19)

(11) Publication number: **0 099 340**

**A2**

(12)

# EUROPEAN PATENT APPLICATION

(21) Application number: 83830010.1

(22) Date of filing: 24.01.83

(51) Int. Cl.³: **B 65 G 1/04**
  B 65 G 47/51

(30) Priority: 12.07.82 IT 6788082

(43) Date of publication of application:
  25.01.84 Bulletin 84/4

(84) Designated Contracting States:
  AT BE CH DE FR GB LI LU NL SE

(71) Applicant: COMAU S.p.A.
  Via Rivalta 30
  I-10095 Grugliasco (Torino)(IT)

(72) Inventor: Ortolano, Paolo
  Corso Peschiera 140/12
  I-10138 Torino(IT)

(74) Representative: Notaro, Giancarlo et al,
  c/o Jacobacci-Casetta & Perani S.p.A. Via Alfieri, 17
  I-10121 Torino(IT)

(54) Mechanised store usable in a transfer line to accumulate pieces being transferred along the line.

(57) A mechanised store usable in a transfer line (2) to accumulate pieces (3) being transferred along the line, comprises a fixed structure (4) arranged adjacent the transfer line (2) and including a plurality of supports (5) for the storage of pieces (3), superimposed in several adjacent vertical rows, and an elevator assembly (7) located on the side of the fixed structure (4) away from the transfer line (2). The elevator assembly comprises a fixed framework, a platform movable vertically relative to the fixed framework, a carriage movable horizontally on the platform, and a telescopic fork device carried by the carriage and arranged to locate and take up pieces (3) respectively on and from the supports (5) of the said fixed structure (4). The mechanised store further includes a transfer device (27) located at the base of each vertical row of supports (5) of the said fixed structure (4) for taking up pieces from the transfer line and transferring them with a stepwise movement into a position in which they are taken up by the telescopic fork device of the elevator assembly (7), or vice versa, after the fork device has first been positioned at the height of the transfer line.

./...

FIG. 1

- 1 -

"Mechanised store usable in a transfer line to accumulate pieces being transferred along the line"

The present invention relates to a mechanised store usable in a transfer line to accumulate pieces being transferred along the line.

The main characteristic of the mechanised store according to the invention lies in the fact that it comprises:

a fixed structure arranged adjacent the transfer line and including a plurality of supports, for storing pieces, superimposed in several adjacent vertical rows,

an elevator assembly located on the side of the fixed structure away from the transfer line and including a fixed framework, a platform movable vertically relative to the fixed framework, a carriage movable horizontally on the platform, and a telescopic fork device carried by the carriage and arranged to place and take up pieces respectively on and from the supports of the fixed structure, and

a transfer device located at the base of each vertical row of supports of the fixed structure and arranged to take up pieces from the transfer line and transfer them with a stepwise movement to a position in which they can be taken up by the telescopic fork device of the elevator assembly or vice versa.

According to a further characteristic, the said transfer device comprises a chain conveyor arranged transverse the transport line and having a first end extending beneath the transport line, this chain conveyor being carried by a support frame which is movable between an inoperative lowered position in which the said first end of the chain conveyor is spaced from the plane containing the lower support surfaces of the pieces being transferred along the line, and an operative raised position in which the said first end of the conveyor touches the said plane, whereby it is arranged to contact the lower support surface of one of the pieces being transferred along the line.

A further characteristic of the invention lies in the fact that the support frame for the chain conveyor is articulated to a fixed frame close to the end of the conveyor opposite the first end and in that this support frame rests, close to the first end, on eccentric means which are rotatable about a horizontal axis to cause the displacement of the support frame of the chain conveyor between its inoperative lowered position and its operative raised position.

In a preferred embodiment, the mechanised store according to the invention includes a further fixed structure including a further series of supports for storing pieces, located on the opposite side of the elevator assembly to the transfer line.

Further characteristics and advantages of the present invention will emerge from the description which follows with reference to the appended drawings, provided purely by way of non-limiting example, in which:

Figure 1 is a partially sectioned perspective view of a mechanised store according to the present invention,

Figure 2 is a front schematic view of the elevator assembly forming part of the mechanised store of Figure 1,

Figure 3 to 5 are a side view, a front view and a plan view of the carriage forming part of the elevator assembly of Figure 2,

Figure 6 is a section on an enlarged scale illustrating a detail of Figure 4,

Figure 7 is a side elevational view of a transfer device forming part of the mechanised store of Figure 1, and

Figure 8 is a front view of the device of Figure 7.

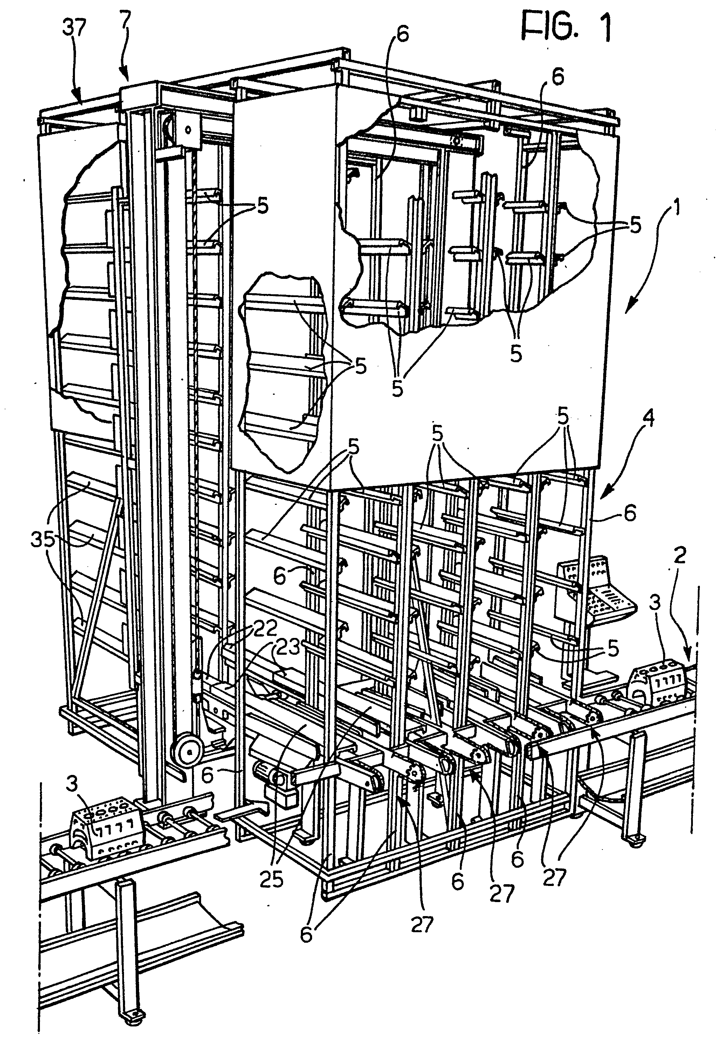

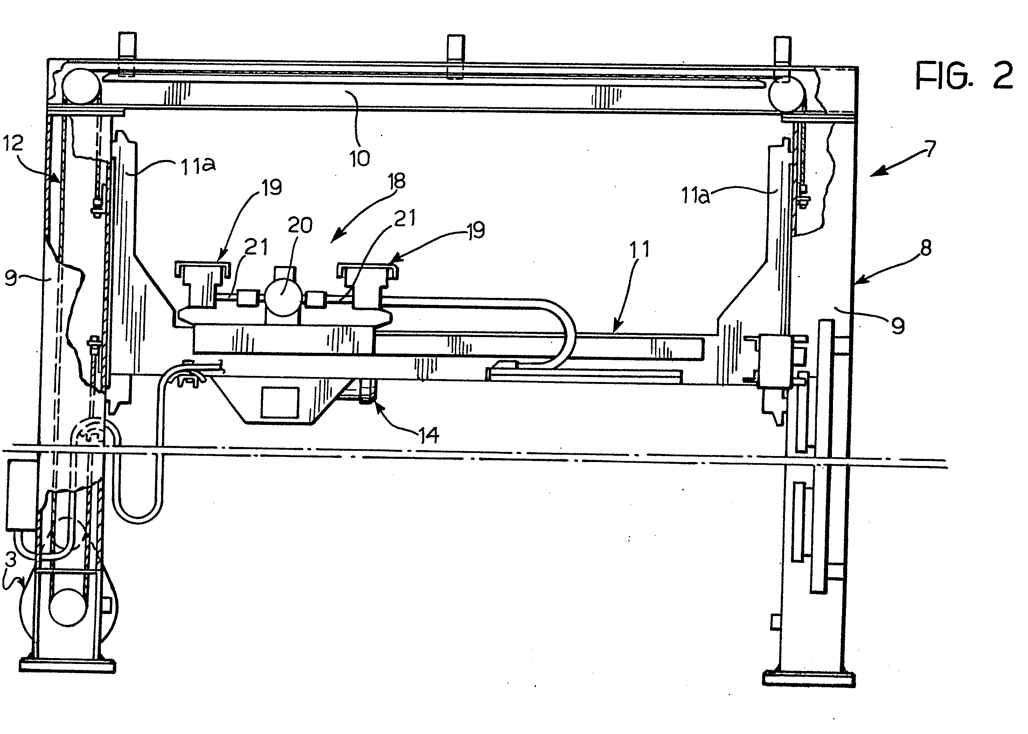

In Figure 1, reference 1 generally indicates a mechanised store usable in a transfer line to accumulate pieces being transferred along the line. Figure 1 illustrates a portion of a roller transfer line 2 which, in the example illustrated, is used for conveying engine blocks 3 in a plant for the manufacture of internal combustion engines for motor vehicles.

The mechanised store 1 permits engine blocks 3 to be accumulated therewithin should, for example, the work station located downstream of the section of line illustrated in Figure 1 not be able to cope with the flow of pieces conveyed on the line.

The mechanised store 1 comprises a fixed structure 4 arranged adjacent the transfer line 2 and including a plurality of supports 5 which are superimposed on one another in several adjacent vertical rows, and are intended to receive different pieces to be store.

- 4 -

The supports 5 are constituted by brackets having their main plane inclined so as to facilitate the flowing away of liquid lubricant which may be associated with the various pieces. Each piece is intended to rest with its two ends on two of the said brackets 5 so as to remain suspended centrally like a bridge between the brackets.

The mechanised store 1 further includes an elevator assembly which is indicated generally by the reference numeral 7 in Figure 1.

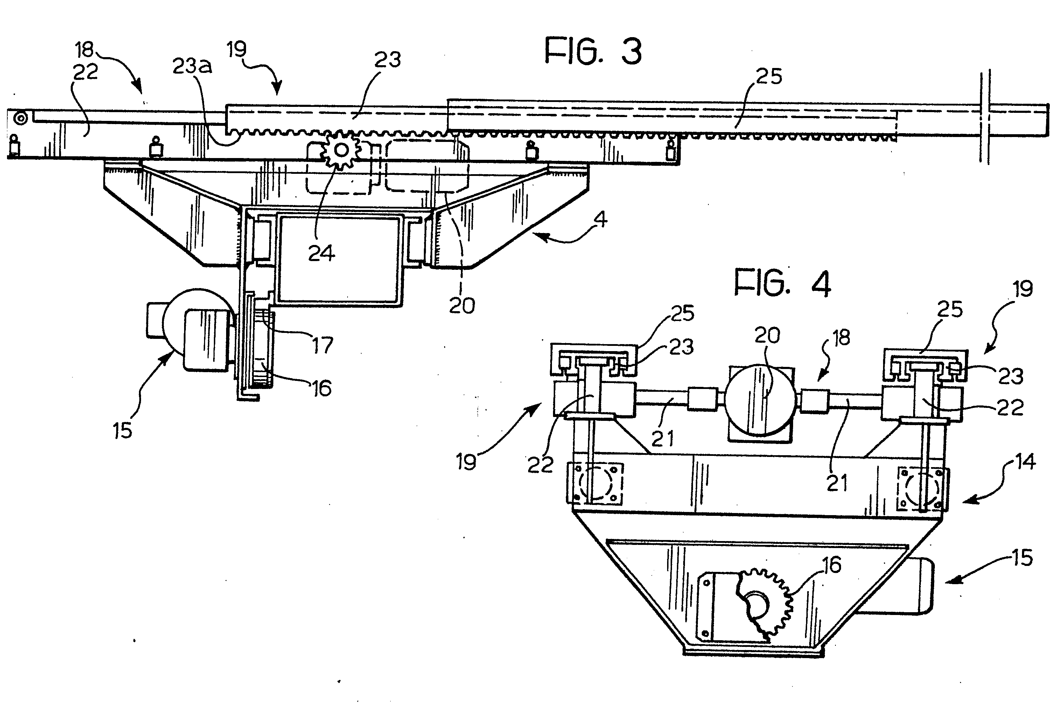

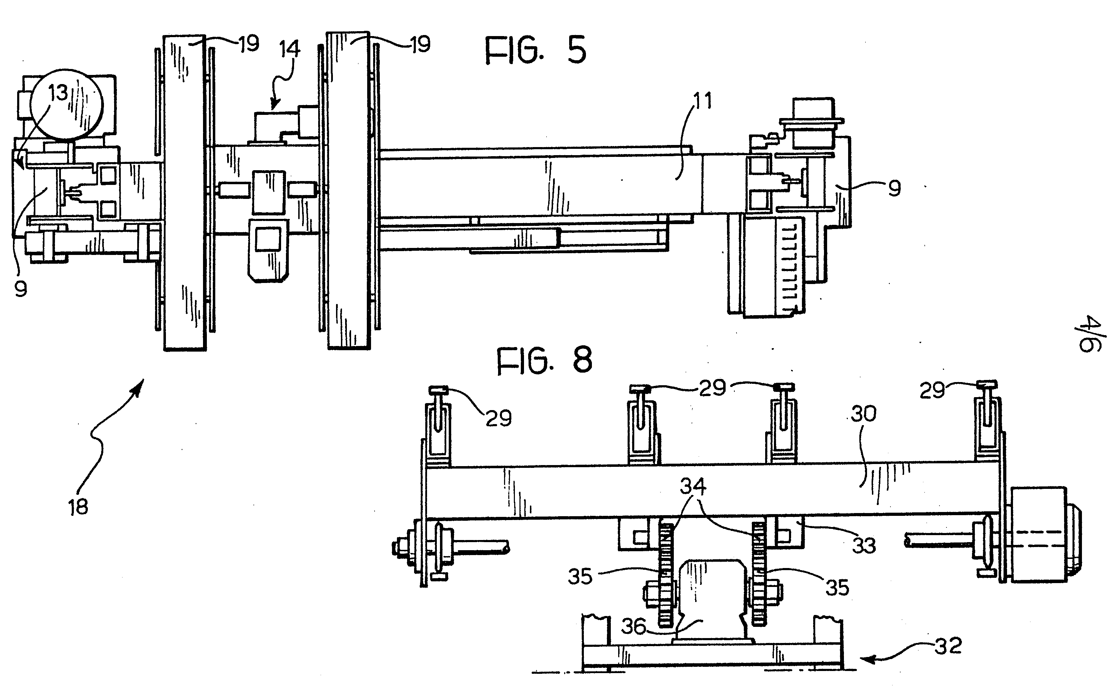

With reference to Figure 2, the elevator assembly 7 includes a fixed portal framework 8 constituted by two pillar elements 9, and a transverse element 10 which joins the two upper ends of the pillar elements 9 together. These pillar elements 9 support the two ends 11a of a platform 11 for vertical sliding movement, its vertical movement being effected by means of a chain transmission 12 from a motor unit 13. A carriage 14, which is also illustrated in Figures 3 to 5, is slidable horizontally on the platform 11. The horizontal movement of the carriage 14 on the platform 11 is effected by a motor unit 15 (see Figure 3) through a gear wheel 16 which is in mesh with a rack 17 carried by the carriage 14.

A telescopic fork device 18 is mounted on the carriage 14 and comprises two fork arms 19 each constituted by three elements slidable on each other. The extension and retraction movement of the fork arms 19 is effected by a motor 20 through two transmission shafts 21.

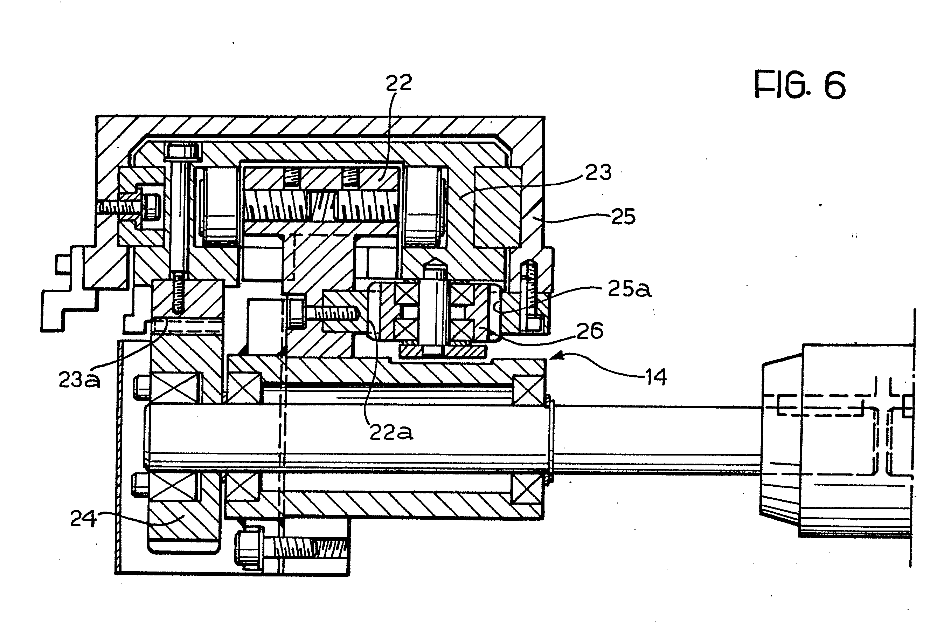

With reference to Figures 3, 6, each telescopic fork arm 19 includes a first element 22 fixed to the carriage 14 and having a substantially T-section, and a second element 23 constituted by a substantially C-section element slidable on the first element 22 by means of the interposition of rollers arranged with their axes horizontal and supported so as to be freely rotatable on the first element 22. Each fork arm 19 finally includes a third element 25, also constituted by a substantially C-section element, slidable on the second element 23. This latter has a rack 23a meshing with a pinion 24 keyed onto the free end of the drive shaft 21. Furthermore, the first element 22 and the third element 25 have two facing racks 22a, 25a which mesh with the same vertical-axis gear wheel 26 supported for free rotation by the second element 23. In this manner, the motor 20 effects the extension and retraction of the second element 23 relative to the first element 22 through the engagement of the pinion 24 with the rack 23a. At the same time the connection formed by the two racks 22a, 25a meshing with the gear wheel 26 causes a translational movement of the third element 25 at twice the speed of the translational movement of the second element 23.

In the example illustrated in Figure 1, the mechanised store can accumulate pieces on the supports 5, superimposing them one on the other in four adjacent vertical rows. At the base of each of the said vertical rows, the mechanised store includes a transfer device, generally indicated by reference numeral 27, which is intended to take up the pieces from the transfer line and to transfer them in a stepwise movement into a position in which they are taken up by the telescopic fork device 18, or vice versa, after the device 18 has previously been positioned at the height of the transfer line. In particular, in the embodiment illustrated, the two most upstream transfer devices 27 (relative to the direction of movement of the transfer line 2) are used for the input of pieces into the mechanised store, while the other two transfer devices 27 are used for the removal of pieces from the mechanised store.

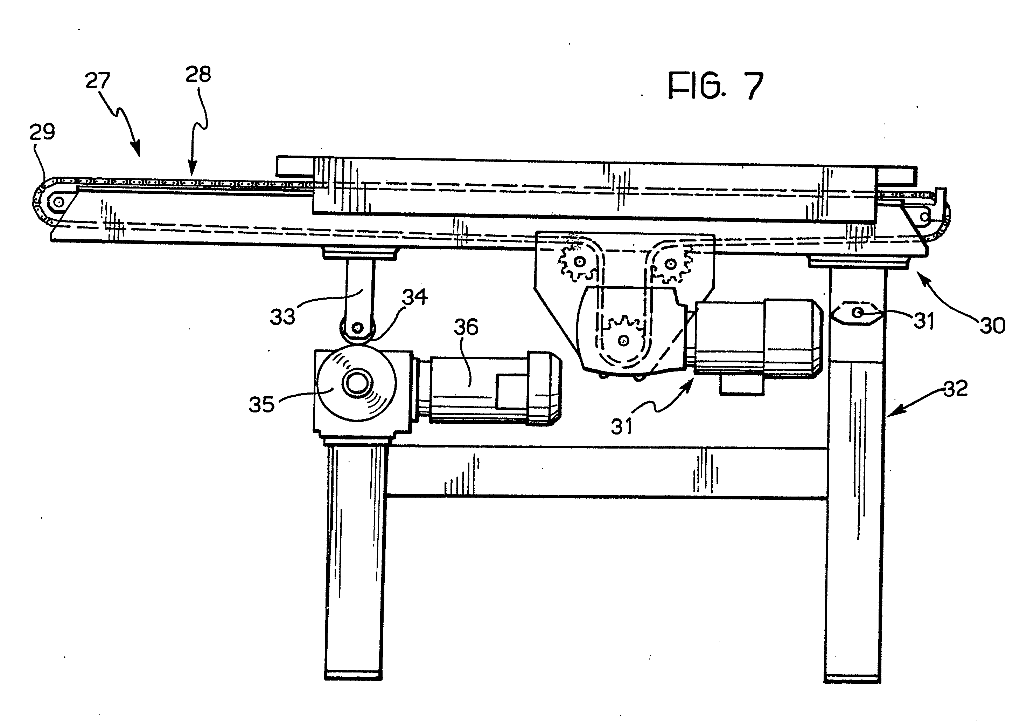

Each transfer device 27 includes (see Figure 7) a chain conveyor 28 which is arranged transverse the transfer line and includes a pair of endless chains 29 disposed in parallel vertical planes. Each of the two pairs of transfer devices is carried by a support frame 30 and has one end (the left hand end in Figure 7) extending beneath the transfer line 2. Reference numeral 31 indicates the motor unit for the chains.

The support frame 30 of each pair of transfer devices 28 is articulated about a horizontal axis 131 on a fixed frame 32 located at the end of the support frame opposite the end extending beneath the transfer line. On its underside the frame 30 has a transverse element 33 provided underneath with two horizontal axis rollers 34 which rest on two eccentric, horizontal-axis discs 35. The discs 35 can be rotated about their axes of articulation by means of a motor unit 36 so as to cause a displacement of the support frame 30 between an

- 7 -

inoperative, lowered position and an operative raised position. In the inoperative lowered position, the portions of the upper passes of the chains 29 which extend beneath the transfer line are spaced from the plane containing the lower support surfaces of the pieces being transferred along the transfer line 2. In the operative raised position, however, the said end portions of the upper passes of the chains 29 lie in the said plane, whereby they are able to come into contact with the lower surfaces of the pieces. Under these conditions, therefore, movement of the chains 29 effected by the motor unit 31 causes transfer of pieces in a direction perpendicular to the direction of transport of the transfer line, so as to cause the pie to be input into the mechanised store (where they are received by the forked device 18) or the output of pieces from the store.

When, for example, it is desired to place in the store a piece which is in the course of being transferred along the line 2, this line is stopped so as to locate the piece to be stored in correspondence with one of the two transfer devices 27 intended to transfer pieces into the store. Prior to this, the platform 11 of the elevator assembly 7 is lowered to the level of the transfer line and the carriage 14 is positioned in correspondence with the transfer device 27 chosen. For a take-up operation, the fork arms 19 are extended so as to bring the two elements 25 of the two fork arms into the position illustrated in Figure 1, adjacent the two transfer devices 27 used for the input of pieces into the store. As is seen, each fork arm 19 is arranged to receive one or more pieces (according to their dimensions) whereby it is possible to carry out simultaneously the operation of storing one or more pairs of pieces. Once the fork device has been located in correspondence with the transfer devices 27, the piece, or the two pieces, to be stored are halted in correspondence with the two said transfer devices which are in their inoperative lowered positions. At this point, the motor unit 36 is actuated to rotate the eccentric discs 35 so as to cause the displacement of the transfer devices into their raised operative positions. Under these conditions, the sections of the upper passes of the chains 29 which extend beneath the transfer line come into contact with the lower support surfaces of the pieces to be stored. The motor unit 31 is then operated to bring about movement of the chains 29 so as to transfer the pieces into the store. With similar successive movements, any number of pairs of pieces can be carried into the store. At this point the fork arms 19 are extended, raised and retracted and the movable platform 11 and the carriage 14 of the elevator assembly 7 are moved so as to bring the pieces taken up from the transfer line into correspondence with the supports intended to receive them. The deposition of the pieces on these supports is achieved by means of the extension of the telescopic fork arms 19.

An entirely similar operation, but in reverse, occurs when it is necessary to take two or more pieces from the mechanised store and to transfer them to the line 2.

In order to increase the capacity of the store, the latter is preferably provided, as illustrated in Figure 1, with a further fixed structure 37 having supports 38 entirely similar to the supports 5 and located on the opposite side of the elevator assembly 7 to the transfer line 2. The elevator assembly 7 is thus positioned between the two store structures 4, 37 and is used to serve both these structures.

CLAIMS:

1.    A mechanised store usable in a transfer line to accumulate pieces being transferred along the line, characterised in that it comprises:

a fixed structure (4) arranged adjacent the transfer line (2) and including a plurality of supports (5) for storing pieces, superimposed in several adjacent vertical rows,

an elevator assembly (7) located on the side of the fixed structure (4) away from the transfer line (2) and including a fixed framework (8), a platform (11) movable vertically relative to the fixed framework (8) a carriage (14) movable horizontally on the platform (11) and a telescopic fork device (18) carried by the carriage (14) and arranged to place and take up pieces respectively on and from the supports (5) of the fixed structure (4), and

a transfer device (27) located at the base of each vertical row of supports (5) of the fixed structure (4) and arranged to take up pieces from the transfer line (2) and transfer them to the telescopic fork device (18) of the elevator assembly (7) or vice versa.

2.    A mechanised store according to Claim 1, characterised in that the transfer device (27) comprises a chain conveyor (28) arranged to carry out a stepwise movement transverse the transport line (2) and having a first end extending beneath the transport line, this chain conveyor (28) being carried by a support structure (30) movable between an inoperative lowered position, in which the said first end of the chain conveyor (28) is spaced from the plane containing the lower support surfaces of the pieces (3) being transferred along the line, and an operative raised position in which the said first end of the chain conveyor (28) touches the said plane, whereby it is able to contact the lower support surfaces of one of the pieces (3) being transferred along the line (2).

3. A mechanised store according to Claim 2, characterised in that the support frame (30) of the chain conveyor (28) is articulated to a fixed frame (32) close to a second end of the chain conveyor (28), and in that this support structure (30) rests, close to the said first end, on eccentric means (35) which are rotatable about a horizontal axis to cause a displacement of the support structure (30) of the chain conveyor (28) between its inoperative lowered position and its operative raised position.

4. A mechanised store according to Claim 1, characterised in that the fixed framework (8) of the elevator assembly (7) is in the form of a portal and is constituted by two pillar elements (9) joined at their upper ends by a transverse element (10).

5. A mechanised store according to Claim 1, characterised in that each telescopic fork arm (19) of the telescopic fork device (18) comprises three profiled elements (22, 23, 25) slidably mounted on each other, and rack and pinion means for effecting extension and retraction movement of the fork arm.

6. A mechanised store according to Claim 5, characterised in that each telescopic fork arm (19) includes

a first element (22) fixed to the said carriage (14) of the elevator assembly (7),

a second element (20) slidably mounted on the first element (22), and

a third element (25) slidably mounted on the second element (23),

in which the second element (23) has a rack (23a) meshing with a drive pinion (24) mounted for rotation on the structure of the carriage (14), and

in which the first element (22) and the third element (25) have facing racks (22a, 25a) meshing with a common pinion (26) freely rotatably mounted on the said second element (23).

0099340

FIG. 1

FIG. 2

2/6

0099340

FIG. 3

FIG. 4

FIG. 5

FIG. 8

FIG. 6

FIG. 7